# EUROPÄISCHE PATENTSCHRIFT

(11) **EP 3 431 261 B1**
(45) Veröffentlichungstag und Bekanntmachung des Hinweises auf die Patenterteilung: **02.09.2020**
(21) Anmeldenummer: 17182654.8
(22) Anmeldetag: 21.07.2017
(51) Int. Cl.: B29C 64/264, B29C 64/268, B29C 64/282, B22F 3/105

(54) **VORRICHTUNG ZUR ADDITIVEN HERSTELLUNG DREIDIMENSIONALER OBJEKTE**
DEVICE FOR ADDITIVES PRODUCTION OF THREE-DIMENSIONAL OBJECTS
DISPOSITIF DE FABRICATION ADDITIVE D'OBJETS TRIDIMENSIONNELS

(43) Veröffentlichungstag der Anmeldung: 23.01.2019
(73) Patentinhaber: CL Schutzrechtsverwaltungs GmbH, 96215 Lichtenfels (DE)
(72) Erfinder: HETZEL, Ralf, 96231 Bad Staffelstein (DE); Hoch, Johanna, 96151 Breitbrunn (DE); BATYI, Benjamin, 96450 Coburg (DE)
(74) Vertreter: Hafner & Kohl PartmbB

(56) Entgegenhaltungen:
- WO-A1-96/08027
- WO-A1-2012/130666
- US-A1- 2010 006 228

## Beschreibung

Die Erfindung betrifft eine Vorrichtung zur additiven Herstellung dreidimensionaler Objekte durch sukzessive schichtweise selektive Belichtung und damit einhergehende sukzessive schichtweise selektive Verfestigung von Baumaterialschichten aus einem vermittels eines Energiestrahls verfestigbaren Baumaterial, umfassend eine Belichtungseinrichtung, welche zur Erzeugung eines Energiestrahls zur sukzessiven schichtweisen selektiven Belichtung und damit einhergehenden sukzessiven schichtweisen selektiven Verfestigung von Baumaterialschichten aus einem vermittels des Energiestrahls verfestigbaren Baumaterial eingerichtet ist, mit den weiteren Merkmalen des Oberbegriffs des Anspruchs 1.

Eine derartige Vorrichtung zur additiven Herstellung dreidimensionaler Objekte ist an und für sich bekannt. Vermittels einer entsprechenden Vorrichtung werden herzustellende dreidimensionale Objekte durch sukzessive schichtweise selektive Belichtung und damit einhergehende sukzessive schichtweise selektive Verfestigung von Baumaterialschichten in den dem schichtbezogenen Querschnitt des herzustellenden Objekts entsprechenden Bereichen aus einem vermittels eines Energiestrahls verfestigbaren Baumaterial additiv aufgebaut.

Weiter ist es bekannt, der Belichtungseinrichtung einer entsprechenden Vorrichtung eine Messeinrichtung zuzuordnen, welche zur Messung der Leistung, insbesondere der Leistungsdichte, des von der Belichtungseinrichtung erzeugten Energiestrahls eingerichtet ist. Dabei sind reproduzierbare Messergebnisse für eine Vielzahl an unterschiedlichen Leistungen jeweiliger Energiestrahlen, d. h. in einem vergleichsweise weiten Leistungsbereich jeweiliger Energiestrahlen, gefordert.

Die bekannten Messeinrichtungen müssen in Abhängigkeit der Ausgangsleistung der Belichtungseinrichtung, d. h. insbesondere in Abhängigkeit der Leistung der im Hinblick auf ihre Leistung zu messenden Energiestrahlen, relativ zu einem Referenzpunkt der Vorrichtung, insbesondere der Bau- bzw. Fokusebene, positioniert werden, um, insbesondere bei hohen Leistungen, durch einen zu hohen flächenmäßigen Energieeintrag bedingte Beschädigungen der Messeinrichtung zu vermeiden. Bis dato ist es deshalb erforderlich, die Messeinrichtung in Abhängigkeit der Ausgangsleistung der Belichtungseinrichtung bzw. der Leistung des Energiestrahls entsprechend zu positionieren; hierbei gilt allgemein, dass hohe Leistungsdichten einen größeren Abstand zu der Bau- bzw. Fokusebene erfordern als niedrigere Leistungsdichten.

Die Benutzung bzw. Handhabung bekannter Messeinrichtungen ist damit aufwändig und fehleranfällig, da für jede Ausgangsleistung der Belichtungseinrichtung bzw. der Leistung des Energiestrahls darauf zu achten ist, dass die Messeinrichtung in einem jeweils korrekten Abstand zu der Bau- bzw. Fokusebene positioniert ist.

WO 2012/130666 A1 offenbart eine additive Fertigungseinrichtung mit einer Möglichkeit zur Erfassung des Fokuspunkts eines Lasers.

WO 96/08027 A1 offenbart eine Messeinrichtung zur Messung von Eigenschaften eines Lasers.

Der Erfindung liegt die Aufgabe zugrunde, eine demgegenüber, insbesondere im Hinblick auf eine vereinfachte Messung der Leistung(sdichte) eines Energiestrahls, verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial in den dem schichtbezogenen Querschnitt des herzustellenden Objekts entsprechenden Bereichen in eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein. Denkbar ist es auch, dass die Vorrichtung als SEBS-Vorrichtung, d. h. als Vorrichtung zur Durchführung selektiver Elektronenstrahlschmelzverfahren (SEBS-Verfahren), ausgebildet ist.

Die Vorrichtung umfasst die zur Durchführung additiver Bauvorgänge typischerweise erforderlichen Funktionskomponenten. Hierzu zählen insbesondere eine Beschichtungseinrichtung und eine Belichtungseinrichtung.

Die Beschichtungseinrichtung ist zur Ausbildung selektiv zu belichtender bzw. selektiv zu verfestigender Baumaterialschichten in einer Bauebene bzw. einem Baufeld der Vorrichtung, in welcher bzw. in welchem die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt, eingerichtet.

Die Belichtungseinrichtung ist zur Erzeugung eines Energiestrahls, d. h. typischerweise eines Laserstrahls, zur sukzessiven schichtweisen selektiven Belichtung und damit einhergehenden sukzessiven schichtweisen selektiven Verfestigung von Baumaterialschichten aus einem vermittels des Energiestrahls verfestigbaren Baumaterial eingerichtet. Die Belichtungseinrichtung kann eine Energiestrahlerzeugungseinrichtung, welche zur tatsächlichen Erzeugung des Energiestrahls eingerichtet ist, und eine Strahlablenkeinrichtung (Scannereinrichtung), welche zur Ablenkung des Energiestrahls auf eine selektiv zu verfestigende Baumaterialschicht eingerichtet ist, als jeweilige Bestandteile der Belichtungseinrichtung umfassen.

Der Belichtungseinrichtung ist eine Messeinrichtung zuordenbar bzw. zugeordnet. Die Messeinrichtung ist zur Messung der Leistung, d. h. insbesondere der Leistungsdichte, des von der Belichtungseinrichtung erzeugten Energiestrahls eingerichtet. Die Messeinrichtung umfasst einen Einkoppelbereich, über welchen ein zu messender Energiestrahl in die Messeinrichtung einkoppelbar ist. Der Einkoppelbereich der Messeinrichtung ist typischerweise durch eine einen Teil eines Messelements der Messeinrichtung bildende Energiestrahleintrittsfläche gebildet bzw. umfasst diese; die Messeinrichtung umfasst sonach ein eine Energiestrahleintrittsfläche umfassendes Messelement. Das Messelement der Messeinrichtung kann als Absorberelement, welches zur Absorption des Energiestrahls eingerichtet ist, ausgebildet sein oder wenigstens ein solches umfassen. Die Messung der Leistung bzw. Leistungsdichte kann sonach auf Grundlage einer Absorption des auf das Messelement treffenden Energiestrahls und einer damit verbundenen physikalischen, insbesondere thermischen, Zustandsänderung des Messelements erfolgen. Konkret kann die Messung der Leistung bzw. Leistungsdichte auf Grundlage einer auf eine Absorption des auf das Messelement treffenden Energiestrahls zurückzuführenden Erwärmung des Messelements erfolgen, wobei die Erwärmung des Messelements Rückschlüsse auf die Leistung bzw. Leistungsdichte des Energiestrahls ermöglicht.

Der Energiestrahleintrittsfläche der Messeinrichtung ist (optisch) wenigstens eine Energiestrahlaufweitungseinrichtung vorgeschaltet angeordnet oder ausgebildet. Der Energiestrahl trifft sonach zunächst auf die Energiestrahlaufweitungseinrichtung bevor er auf die Energiestrahleintrittsfläche der Messeinrichtung trifft. Die Energiestrahlaufweitungseinrichtung ist zur, insbesondere optischen, Aufweitung - unter einer (optischen) Aufweitung des Energiestrahls ist typischerweise eine Vergrößerung des optischen Strahldurchmessers des Energiestrahls zu verstehen - eines im Hinblick auf seine Leistung bzw. Leistungsdichte zu messenden Energiestrahls eingerichtet. Die Energiestrahlaufweitungseinrichtung umfasst hierfür wenigstens ein, gegebenenfalls mehrere, Energiestrahlaufweitungselement(e), welche(s) zur Aufweitung eines Energiestrahls eingerichtet ist/sind. Bei einem entsprechenden Energiestrahlaufweitungselement kann es sich z. B. um ein optisches Element, insbesondere um eine Linse, handeln.

Die Energiestrahlaufweitungseinrichtung umfasst typischerweise einen Einkoppelbereich, über welchen ein aufzuweitender Energiestrahl in die Energiestrahlaufweitungseinrichtung einkoppelbar ist, und einen Auskoppelbereich, über welchen ein aufgeweiteter Energiestrahl aus der Energiestrahlaufweitungseinrichtung auskoppelbar ist. Der Auskoppelbereich der Energiestrahlaufweitungseinrichtung ist im Betrieb der Messeinrichtung typischerweise dem Einkoppelbereich der Messeinrichtung gegenüber liegend angeordnet, sodass ein aus der Energiestrahlaufweitungseinrichtung ausgekoppelter, aufgeweiteter Energiestrahl in das Messelement einkoppelbar ist.

Die durch die Energiestrahlaufweitungseinrichtung mögliche Aufweitung des Energiestrahls trägt den im Zusammenhang mit dem eingangs beschriebenen Stand der Technik beschriebenen Aspekten Rechnung. Durch die Aufweitung des Energiestrahls kann, insbesondere bei vergleichsweise hohen Ausgangsleistungen der Belichtungseinrichtung bzw. vergleichsweise hohen Leistungen des Energiestrahls, eine Beschädigung der Messeinrichtung aufgrund eines zu hohen Energieeintrags vermieden werden. Die Aufweitung des Energiestrahls erfolgt sonach insbesondere mit der Zielsetzung, den über den Energiestrahl in die Messeinrichtung eingebrachten Energieeintrag zu reduzieren, um Beschädigungen der Messeinrichtung zu vermeiden. Hieraus ergibt sich, dass die Messeinrichtung grundsätzlich unabhängig von der Ausgangsleistung der Belichtungseinrichtung bzw. der Leistung des Energiestrahls positioniert werden kann. Die Benutzung bzw. Handhabung der Messeinrichtung ist damit weniger aufwändig und fehleranfällig, da nicht für jede Ausgangsleistung der Belichtungseinrichtung bzw. der Leistung des Energiestrahls darauf zu achten ist, dass die Messeinrichtung in einem jeweils korrekten Abstand zu der Bau- bzw. Fokusebene positioniert ist. Demnach sind automatisierbare bzw. automatisierte respektive standardisierbare bzw. standardisierte Messverfahren für einen weiten Bereich an Leistungen bzw. Leistungsdichten jeweiliger zu messender Energiestrahlen realisierbar.

Zweckmäßig ist die Messeinrichtung (und somit auch die dieser zugeordnete Energiestrahlaufweitungseinrichtung) im Betrieb unabhängig von der Ausgangsleistung der Belichtungseinrichtung bzw. der Leistung des im Hinblick auf seine Leistung bzw. Leistungsdichte zu messenden Energiestrahls in einer konstanten, insbesondere vertikalen, Positionierung relativ zu wenigstens einem Referenzpunkt der Vorrichtung, insbesondere der Bauebene der Vorrichtung, in welcher die selektive Verfestigung von Baumaterialschichten erfolgt, und/oder einer Fokusebene des Energiestrahls, angeordnet. Derart ist die Benutzung bzw. Handhabung der Messeinrichtung deutlich verbessert. Bei einer entsprechenden Anordnung der Messeinrichtung kann es sich unabhängig von der Ausgangsleistung der Belichtungseinrichtung bzw. der Leistung des im Hinblick auf seine Leistung bzw. Leistungsdichte zu messenden Energiestrahls um eine, insbesondere maximal, um 60mm von der Bauebene der Vorrichtung beabstandete Anordnung der Messeinrichtung relativ zu der Bauebene der Vorrichtung handeln. Die Oberseite der Messeinrichtung, d. h. einer Gehäusekonstruktion der Messeinrichtung, kann damit, insbesondere maximal, um 60 mm von der Bauebene der Vorrichtung beabstandet sein. Insbesondere beträgt der Abstand zwischen Bau- bzw. Fokusebene und der Ebene des Messelements, insbesondere maximal, 60 mm. Betrachtet man die der Messeinrichtung optisch vorgeschaltet angeordnete Energiestrahlaufweitungseinrichtung kann es sich unabhängig von der Ausgangsleistung der Belichtungseinrichtung bzw. der Leistung des im Hinblick auf seine Leistung bzw. Leistungsdichte zu messenden Energiestrahls um eine, insbesondere maximal, um 90 mm von der Bauebene der Vorrichtung beabstandete Anordnung der Energiestrahlaufweitungseinrichtung relativ zu der Bauebene der Vorrichtung handeln. Die Oberseite der Energiestrahlaufweitungseinrichtung, d. h. einer Gehäusekonstruktion der Energiestrahlaufweitungseinrichtung, kann damit, insbesondere maximal, um 90 mm von der Bau- bzw. Fokusebene der Vorrichtung beabstandet sein.

Die Messeinrichtung kann eine einen Grundkörper der Messeinrichtung bildende, insbesondere quader- oder würfelartig ausgebildete, Gehäusekonstruktion umfassen. Die messeinrichtungsseitige Energiestrahleintrittsfläche ist dabei typischerweise an oder in einer Außenfläche der Gehäusekonstruktion angeordnet oder ausgebildet. An oder in der Gehäusekonstruktion sind die zur Messung der Leistung bzw. Leistungsdichte erforderlichen Funktionskomponenten der Messeinrichtung, d. h. z. B. das bereits erwähnte Messelement, angeordnet oder ausgebildet.

Auch die Energiestrahlaufweitungseinrichtung kann eine, insbesondere quaderartig ausgebildete, Gehäusekonstruktion umfassen. Die energiestrahlaufweitungseinrichtungsseitige Gehäusekonstruktion ist oberhalb der Außenfläche der Gehäusekonstruktion der Messeinrichtung, an oder in welcher die Energiestrahleintrittsfläche angeordnet oder ausgebildet ist, anordenbar oder angeordnet. Insbesondere kann die Gehäusekonstruktion der Energiestrahlaufweitungseinrichtung, z. B. vermittels einer form- und/oder kraftschlüssigen und/oder stoffschlüssigen Befestigungsart, an der Gehäusekonstruktion der Messeinrichtung befestigt sein, sodass die beiden Gehäusekonstruktionen eine gemeinsam handhabbare Baugruppe bilden.

An dieser Stelle ist allgemein zu erwähnen, dass die Messeinrichtung (typischerweise nebst der Energiestrahlaufweitungseinrichtung) zum Zweck der Messung der Leistung bzw. Leistungsdichte typischerweise in eine inertisierbare Prozesskammer der Vorrichtung eingesetzt wird. Die Vorrichtung befindet sich hierbei in einem Messmodus. In einem Baumodus der Vorrichtung, in welchem der tatsächliche additive Aufbau dreidimensionaler Objekte erfolgt, ist die Messeinrichtung typischerweise außerhalb der Prozesskammer der Vorrichtung angeordnet.

Die Vorrichtung umfasst eine in der Bauebene der Vorrichtung anordenbare oder angeordnete plattenartige bzw. förmige, der Messeinrichtung zuzuordnende Halterungseinrichtung. Die Halterungseinrichtung umfasst mehrere definierte Mess- bzw. Halterungspositionen, in welchen die Messeinrichtung oder eine die Messeinrichtung lagernde Adaptereinrichtung in einer definierten räumlichen Positionierung relativ zu einem Referenzpunkt der Vorrichtung, beispielsweise der Bau- bzw. Fokusebene, halterbar ist.

Eine entsprechende Adaptereinrichtung kann einen ersten Abschnitt (Halterungsabschnitt), mit welchem die Adaptereinrichtung in einer entsprechenden Halterungsposition der Halterungseinrichtung halterbar ist, und wenigstens einen zweiten Abschnitt (Lagerabschnitt), mit welchem die Adaptereinrichtung wenigstens eine Messeinrichtung lagert, umfassen. Eine vermittels einer Adaptereinrichtung gelagerte Messeinrichtung ist stets in einer definierten räumlichen, insbesondere vertikalen, Positionierung relativ zu wenigstens einem Referenzpunkt der Vorrichtung, insbesondere der Bau- oder Fokusebene der Vorrichtung, angeordnet. Wie erwähnt, kann es sich bei einer entsprechenden Anordnung um eine um ca. 60mm von der Bau- bzw. Fokusebene der Vorrichtung beabstandete Anordnung der Messeinrichtung relativ zu der Bau- bzw. Fokusebene der Vorrichtung handeln.

Jeweilige Halterungspositionen sind durch in einer definierten, z. B. matrixartigen, d. h. reihen- und/oder spaltenartigen, Anordnung ausgebildete Ausnehmungen in einem, insbesondere plattenartigen bzw. -förmigen, Grundkörper der Halterungseinrichtung gebildet, in welchen die Messeinrichtung oder eine die Messeinrichtung lagernde Adaptereinrichtung, insbesondere formschlüssig, befestigbar ist. Zum Zweck der Befestigung der Mess- bzw. Adaptereinrichtung an der Halterungseinrichtung sind sowohl messeinrichtungs- bzw. adaptereinrichtungsseitig als auch halterungseinrichtungsseitig Befestigungselemente angeordnet oder ausgebildet, welche eingerichtet sind, unter Ausbildung einer (beschädigungs- bzw. zerstörungsfrei) lösbaren Befestigung der Mess- bzw. Adaptereinrichtung in jeweiligen Halterungspositionen zusammenzuwirken. Bei entsprechenden Befestigungselementen kann es sich für den Fall einer formschlüssigen Befestigung der Mess- bzw. Adaptereinrichtung in jeweiligen Halterungspositionen um Formschlusselemente, d. h. z. B. um Formschlussvorsprünge bzw. Formschlussaufnahmen, bzw. um Steckelemente, d. h. z. B. um Steckvorsprünge bzw. Steckaufnahmen, handeln. Die Befestigung der Mess- bzw. Adaptereinrichtung in jeweiligen Halterungspositionen ist, wie erwähnt, typischerweise lösbar; mithin kann eine Befestigung der Mess- bzw. Adaptereinrichtung in einer Halterungsposition bei Bedarf gelöst, d. h. die Mess- bzw. Adaptereinrichtung aus der Halterungsposition entnommen und in einer anderen Halterungsposition befestigt werden.

Es ist denkbar, dass die Messeinrichtung oder eine die Messeinrichtung lagernde Adaptereinrichtung in wenigstens einem Bewegungsfreiheitsgrad zwischen wenigstens zwei Halterungspositionen, insbesondere schiebebeweglich, bewegbar gelagert ist. Jeweilige Halterungspositionen können durch Bewegungsbahnen der Messeinrichtung definierende Führungsabschnitte, entlang welcher die Messeinrichtung bewegbar gelagert ist, miteinander verbunden sein. Eine bewegliche Lagerung der Mess- bzw. Adaptereinrichtung kann die Handhabung der Messeinrichtung verbessern.

Die Halterungseinrichtung kann flächenmäßig so bemessen sein, dass sie die Bauebene der Vorrichtung zumindest abschnittsweise, insbesondere vollständig, abdeckt. Insbesondere kann die Halterungseinrichtung flächenmäßig so bemessen sein, dass sie innerhalb einer, typischerweise einen Bestandteil eines Baumoduls bildenden, Baukammer der Vorrichtung anordenbar oder angeordnet ist. Die zweckmäßige Ausführungsform einer Halterungseinrichtung, welche so bemessen ist, dass sie die Bauebene der Vorrichtung vollständig abdeckt, ermöglicht eine Vielzahl an unterschiedlichen Halterungs- bzw. Messpositionen, sodass im Rahmen der Durchführung von Messvorgängen auch winklig relativ zu einer Normalen verlaufende Energiestrahlen im Hinblick auf ihre Leistung bzw. Leistungssichte mit hoher Reproduzierbarkeit messbar sind.

Die Halterungseinrichtung kann mehrere, insbesondere relativ zueinander bewegbar gelagerte, aneinander befestigbare oder befestigte Halterungseinrichtungssegmente umfassen. Die Segmentierung der Halterungseinrichtung in mehrere Halterungseinrichtungssegmente verbessert die Handhabbarkeit bzw. Transportierbarkeit der Halterungseinrichtung. Relativ zueinander bewegbar gelagert aneinander befestigbare oder befestigte Halterungseinrichtungssegmente können z. B. zwischen einer ersten Stellung (Betriebsstellung), in welcher diese derart relativ zueinander bewegt sind, dass diese die Bauebene der Vorrichtung vollständig abdecken, und einer zweiten Stellung (Nichtbetriebsstellung), in welcher diese derart relativ zueinander bewegt sind, dass diese die Bauebene der Vorrichtung nicht vollständig abdecken, bewegbar gelagert sein. Eine bewegbare Lagerung jeweiliger Halterungseinrichtungssegmente kann z. B. durch eine Klapp- oder Schwenklagerung der Halterungseinrichtungssegmente realisiert sein, welche ein Klappen oder Schwenken eines Halterungseinrichtungssegments relativ zu einem zweiten Halterungseinrichtungssegments ermöglicht.

Die Vorrichtung kann, wie erwähnt, eine der Belichtungseinrichtung zuordenbare oder zugeordnete Strahlablenkeinrichtung umfassen. Die Strahlablenkeinrichtung ist zur Ablenkung des Energiestrahls auf eine in einer bestimmten Halterungsposition gehalterte Messeinrichtung - gemeint ist stets eine Messeinrichtung mit einer, wie beschrieben, auf einer Gehäusekonstruktion der Messeinrichtung angeordneten Energiestrahlaufweitungseinrichtung - eingerichtet. Insbesondere ist die Strahlablenkeinrichtung eingerichtet, einen Energiestrahl gemäß einer, insbesondere benutzerseitig, vorgebbaren oder vorgegebenen Ab- bzw. Reihenfolge auf unterschiedlich positionierte, d. h. insbesondere in unterschiedlichen Halterungspositionen gehalterte, Messeinrichtungen zu lenken. Über die Vorgabe entsprechender Ab- bzw. Reihenfolgen können definierte Messprogramme, etwa zur Aufnahme von Leistungskurven bzw. -kennlinien zu Qualitätssicherungszwecken, implementiert werden. Hierfür kann eine hard- und/oder softwaremäßig implementierte Steuereinrichtung der Vorrichtung steuerungstechnisch mit der Strahlablenkeinrichtung zusammenwirken.

Die Strahlablenkeinrichtung kann sonach in Abhängigkeit von von einer hard- und/oder softwaremäßig implementierten Steuereinrichtung erzeugten Steuerbefehlen steuerbar oder gesteuert sein. Die Steuereinrichtung kann eingerichtet sein, die Steuerbefehle auf Grundlage von über eine Benutzerschnittstelle, insbesondere eine Touch-Displayeinrichtung, der Vorrichtung gegebenen Benutzereingaben zu erzeugen. Über eine entsprechende Benutzerschnittstelle sind insbesondere entsprechende Halterungs-Messpositionen, auf welche ein Energiestrahl gelenkt werden soll, bzw. entsprechende Ab- bzw. Reihenfolgen, gemäß welchen ein Energiestrahl auf in unterschiedlichen Halterungspositionen gehalterte Messeinrichtungen gelenkt werden soll, vorgebbar.

Die Erfindung betrifft neben der beschriebenen Vorrichtung auch eine Messeinrichtung für eine entsprechende Vorrichtung. Die Messeinrichtung ist zur Messung der Leistung, insbesondere der Leistungsdichte, des von einer Belichtungseinrichtung erzeugten Energiestrahls eingerichtet und umfasst ein eine eine Energiestrahleintrittsfläche umfassendes Messelement. Die Messeinrichtung zeichnet sich durch wenigstens eine der Energiestrahleintrittsfläche vorgeschaltet angeordnete oder ausgebildete Energiestrahlaufweitungseinrichtung aus, welche zur, insbesondere optischen, Aufweitung eines im Hinblick auf seine Leistung zu messenden Energiestrahls eingerichtet ist. Sämtliche Ausführungen im Zusammenhang mit der Vorrichtung gelten analog für die Messeinrichtung.

Weiterhin betrifft die Erfindung ein Verfahren zur Messung der Leistung, insbesondere der Leistungsdichte, eines Energiestrahls einer Belichtungseinrichtung einer Vorrichtung zur additiven Herstellung dreidimensionaler Objekte. Die Vorrichtung ist zur additiven Herstellung dreidimensionaler Objekte durch sukzessive schichtweise selektive Belichtung und damit einhergehende sukzessive schichtweise selektive Verfestigung von Baumaterialschichten aus einem vermittels eines Energiestrahls verfestigbaren Baumaterial eingerichtet und umfasst eine Belichtungseinrichtung, welche zur Erzeugung eines Energiestrahls zur sukzessiven schichtweisen selektiven Belichtung und damit einhergehenden sukzessiven schichtweisen selektiven Verfestigung von Baumaterialschichten aus einem vermittels des Energiestrahls verfestigbaren Baumaterial eingerichtet ist. Das Verfahren zeichnet sich dadurch aus, dass zu dessen Durchführung wenigstens eine Messeinrichtung, insbesondere eine Messeinrichtung der beschriebenen Vorrichtung, verwendet wird. Sämtliche Ausführungen im Zusammenhang mit der Vorrichtung gelten damit auch analog für das Verfahren.

Wesentlich an dem Verfahren ist damit, dass die Messeinrichtung (und somit auch die dieser zugeordnete Energiestrahlaufweitungseinrichtung) unabhängig von der Ausgangsleistung der Belichtungseinrichtung bzw. der Leistung des im Hinblick auf seine Leistung bzw. Leistungsdichte zu messenden Energiestrahls in einer konstanten, insbesondere vertikalen, Positionierung relativ zu wenigstens einem Referenzpunkt der Vorrichtung, insbesondere der Bauebene der Vorrichtung, in welcher die selektive Verfestigung von Baumaterialschichten erfolgt, und/oder einer Fokusebene des Energiestrahls, angeordnet werden kann bzw. angeordnet wird.

Die Erfindung ist anhand von Ausführungsbeispielen in den Zeichnungsfiguren näher erläutert. Dabei zeigt:
- Fig. 1: eine Prinzipdarstellung einer Vorrichtung gemäß einem Ausführungsbeispiel in einer schematischen Ansicht;
- Fig. 2: eine Prinzipdarstellung einer Messeinrichtung gemäß einem Ausführungsbeispiel in einer perspektivischen Ansicht; und
- Fig. 3: eine Prinzipdarstellung einer in einer Halterungseinrichtung angeordneten Messeinrichtung gemäß einem Ausführungsbeispiel in einer perspektivischen Ansicht.

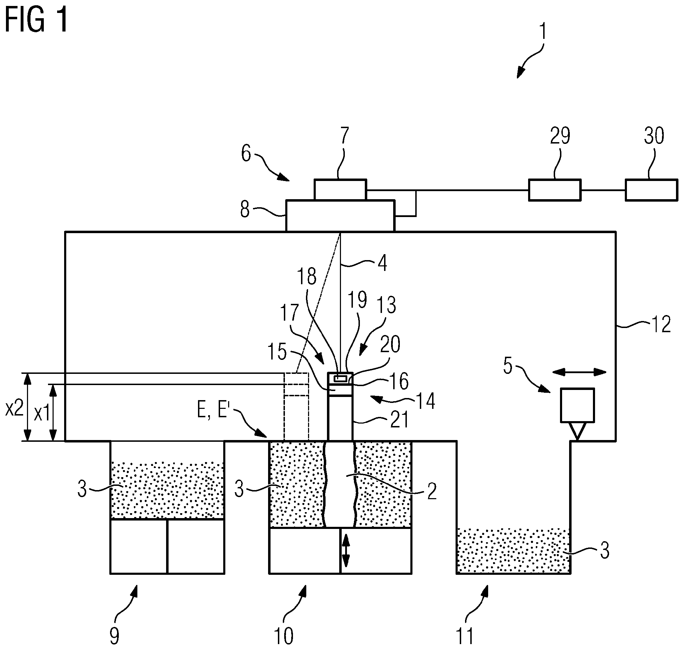

Fig. 1 zeigt eine Prinzipdarstellung einer Vorrichtung 1 gemäß einem Ausführungsbeispiel in einer rein schematischen Ansicht.

Die Vorrichtung 1 dient im Allgemeinen der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Energiestrahls 4, d. h. insbesondere eines Laserstrahls. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann z. B. als Laser-CUSING®-Vorrichtung, d. h. als Vorrichtung zur Durchführung selektiver Laserschmelzverfahren (SLM-Verfahren), ausgebildet sein.

Die Vorrichtung 1 umfasst die zur Durchführung additiver Bauvorgänge erforderlichen Funktionskomponenten; in Fig. 1 ist beispielsweise eine Beschichtungseinrichtung 5 und eine Belichtungseinrichtung 6 gezeigt. Die Beschichtungseinrichtung 5 ist zur Ausbildung selektiv zu belichtender bzw. selektiv zu verfestigender Baumaterialschichten in einer Bauebene E bzw. einem Baufeld der Vorrichtung 1 eingerichtet und umfasst hierzu ein - wie durch den Doppelpfeil P1 angedeutet - relativ zu einer Bauebene bzw. einem Baufeld der Vorrichtung 1 bewegbar gelagertes, insbesondere klingenartiges bzw. -förmiges, Beschichtungselement (nicht näher bezeichnet). Die Belichtungseinrichtung 6 ist zur Erzeugung eines Energiestrahls 4 zu selektiven Belichtung selektiv zu verfestigender Baumaterialschichten in der Bauebene E der Vorrichtung 1 eingerichtet und umfasst hierfür typischerweise eine Strahlerzeugungseinrichtung 7, welche zur Erzeugung des Energiestrahls 4 eingerichtet ist, gegebenenfalls eine Strahlablenkeinrichtung 8 (Scannereinrichtung), welche zur Ablenkung des von der Strahlerzeugungseinrichtung 7 erzeugten Energiestrahls 4 z. B. auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc. (nicht gezeigt).

In Fig. 1 ist ferner ein Dosiermodul 9, ein Baumodul 10 und ein Überlaufmodul 11 dargestellt, welche an einen unteren Bereich einer intertisierbaren Prozesskammer 12 der Vorrichtung 1 angedockt sind. Die genannten Module können auch einen unteren Bereich der Prozesskammer 12 der Vorrichtung 1 bilden.

Die Vorrichtung 1 befindet sich in dem in Fig. 1 gezeigten Ausführungsbeispiel in einem Messmodus, in welchem eine der Belichtungseinrichtung 6 zuordenbare bzw. zugeordnete Messeinrichtung 13 zum Zweck der Messung der Leistung bzw. Leistungsdichte des Energiestrahls 4 in die Prozesskammer 12 eingesetzt ist.

Die Messeinrichtung 13 ist zur Messung der Leistung, d. h. insbesondere der Leistungsdichte, des Energiestrahls 4 eingerichtet. Die Messeinrichtung 13 umfasst einen Einkoppelbereich 14, über welchen ein zu messender Energiestrahl 4 in die Messeinrichtung 13 einkoppelbar ist. Der Einkoppelbereich 14 ist durch eine einen Teil eines Messelements 15 der Messeinrichtung13 bildende Energiestrahleintrittsfläche 16 gebildet. Das Messelement 15 kann als Absorberelement, welches zur Absorption des Energiestrahls 4 eingerichtet ist, ausgebildet sein. Die Messung der Leistung bzw. Leistungsdichte des Energiestrahls 4 kann sonach auf Grundlage einer Absorption des auf das Messelement 15 treffenden Energiestrahls 4 und einer damit verbundenen physikalischen, insbesondere thermischen, Zustandsänderung des Messelements 15 erfolgen. Konkret kann die Messung der Leistung bzw. Leistungsdichte des Energiestrahls 4 auf Grundlage einer auf eine Absorption des auf das Messelement 15 treffenden Energiestrahls 4 zurückzuführenden Erwärmung des Messelements 15 erfolgen, wobei die Erwärmung des Messelements 15 Rückschlüsse auf die Leistung bzw. Leistungsdichte des Energiestrahls 4 ermöglicht.

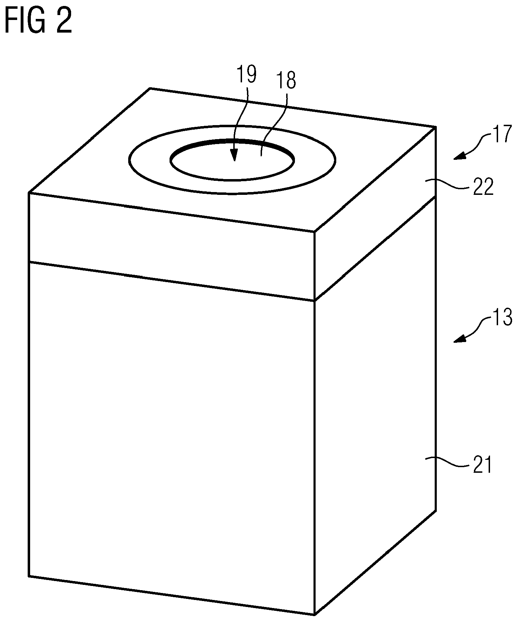

Der Energiestrahleintrittsfläche 16 der Messeinrichtung 13 ist (optisch) eine Energiestrahlaufweitungseinrichtung 17 vorgeschaltet angeordnet bzw. ausgebildet (vgl. insbesondere auch Fig. 2). Der Energiestrahl 4 trifft sonach zunächst auf die Energiestrahlaufweitungseinrichtung 17 bevor er auf die Energiestrahleintrittsfläche 16 der Messeinrichtung 13 trifft. Die Energiestrahlaufweitungseinrichtung 17 ist zur Aufweitung eines im Hinblick auf seine Leistung bzw. Leistungsdichte zu messenden Energiestrahls 4 eingerichtet. Die Energiestrahlaufweitungseinrichtung 17 umfasst hierfür wenigstens ein Energiestrahlaufweitungselement 18, welches zur Aufweitung des Energiestrahls 4 eingerichtet ist. Bei dem Energiestrahlaufweitungselement 18 handelt es sich um ein optisches Element, insbesondere um eine Linse.

Die Energiestrahlaufweitungseinrichtung 17 umfasst einen Einkoppelbereich 19, über welchen ein aufzuweitender Energiestrahl 4 in die Energiestrahlaufweitungseinrichtung 17 einkoppelbar ist, und einen Auskoppelbereich 20, über welchen ein aufgeweiteter Energiestrahl 4 aus der Energiestrahlaufweitungseinrichtung 17 auskoppelbar ist. Der Auskoppelbereich 20 der Energiestrahlaufweitungseinrichtung 17 ist, wie sich aus Fig. 1 ergibt, im Betrieb der Messeinrichtung 13 dem Einkoppelbereich 14 der Messeinrichtung 13 gegenüber liegend angeordnet, sodass ein aus der Energiestrahlaufweitungseinrichtung 17 ausgekoppelter, aufgeweiteter Energiestrahl 4 in das Messelement 15 einkoppelbar ist.

Durch die durch die Energiestrahlaufweitungseinrichtung mögliche Aufweitung des Energiestrahls 4 kann, insbesondere bei vergleichsweise hohen Ausgangsleistungen der Belichtungseinrichtung 6 bzw. vergleichsweise hohen Leistungen des Energiestrahls 4, eine Beschädigung der Messeinrichtung 13 aufgrund eines zu hohen Energieeintrags vermieden werden. Die Aufweitung des Energiestrahls 4 erfolgt sonach mit der Zielsetzung, den über den Energiestrahl 4 in die Messeinrichtung 13 eingebrachten Energieeintrag zu reduzieren, um Beschädigungen der Messeinrichtung 13 zu vermeiden. Hieraus ergibt sich, dass die Messeinrichtung 13 unabhängig von der Ausgangsleistung der Belichtungseinrichtung 6 bzw. der Leistung des Energiestrahls 4 positioniert werden kann. Die Benutzung bzw. Handhabung der Messeinrichtung 13 ist damit weniger aufwändig und fehleranfällig, da nicht für jede Ausgangsleistung der Belichtungseinrichtung 6 bzw. der Leistung des Energiestrahls 4 darauf zu achten ist, dass die Messeinrichtung 13 in einem jeweils korrekten Abstand zu der Bau- bzw. Fokusebene der Vorrichtung 1 positioniert ist.

Die Messeinrichtung 13 (und somit auch die dieser zugeordnete Energiestrahlaufweitungseinrichtung 17) ist im Betrieb unabhängig von der Ausgangsleistung der Belichtungseinrichtung 6 bzw. der Leistung des im Hinblick auf seine Leistung bzw. Leistungsdichte zu messenden Energiestrahls 4 in einer konstanten, insbesondere vertikalen, Positionierung relativ zu wenigstens einem Referenzpunkt der Vorrichtung, insbesondere der Bauebene E der Vorrichtung 1 bzw. der Fokusebene E' des Energiestrahls 4 angeordnet.

In dem in Fig. 1 gezeigten Ausführungsbeispiel handelt es sich bei einer entsprechenden Anordnung der Messeinrichtung 13 beispielhaft um eine durch die Abstandsangabe x1 angedeutete konstante maximal um 60 mm von der Bauebene E beabstandete Anordnung der Messeinrichtung 13 relativ zu der Bauebene E. Die Oberseite der Messeinrichtung 13, d. h. einer Gehäusekonstruktion 21 der Messeinrichtung 13, ist damit maximal um 60 mm von der Bauebene E beabstandet. Der Abstand zwischen Bau- bzw. Fokusebene E, E' und der Ebene des Messelements 15 beträgt sonach maximal 60 mm. Betrachtet man die Energiestrahlaufweitungseinrichtung 17 handelt es sich beispielhaft um eine durch die Abstandsangabe x2 angedeutete maximal um 90 mm von der Bauebene E beabstandete Anordnung der Energiestrahlaufweitungseinrichtung 17 relativ zu der Bauebene E. Die Oberseite der Energiestrahlaufweitungseinrichtung 17, d. h. einer Gehäusekonstruktion 22 der Energiestrahlaufweitungseinrichtung 17, ist damit maximal um 90 mm von der Bau- bzw. Fokusebene E, E' beabstandet.

Im Zusammenhang mit Fig. 1 ist zu erwähnen, dass der Betrieb der Messeinrichtung 13, d. h. die Durchführung entsprechender Messvorgänge, typischerweise nur dann erfolgt, wenn die Vorrichtung 1 frei von Baumaterial 3 ist, d. h. insbesondere sich innerhalb der Prozesskammer 12 der Vorrichtung 1 kein Baumaterial 3 befindet. Ferner sollte sich während des Betriebs der Messeinrichtung 13 kein Bauteil 2 innerhalb der Vorrichtung 1, d. h. insbesondere innerhalb der Prozesskammer 12 der Vorrichtung 1, befinden.

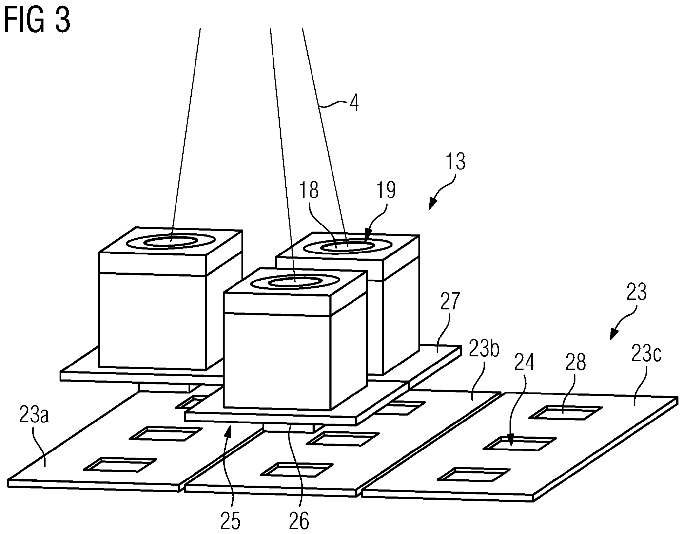

Anhand der Fig. 2, 3 ist ersichtlich, dass die Messeinrichtung 13 eine einen Grundkörper der Messeinrichtung 13 bildende, beispielhaft quader- oder würfelartig ausgebildete, Gehäusekonstruktion 21 umfasst. Die messeinrichtungsseitige Energiestrahleintrittsfläche 16 ist dabei an bzw. in einer Außenfläche der Gehäusekonstruktion 21 angeordnet. An oder in der Gehäusekonstruktion 21 sind die zur Messung der Leistung bzw. Leistungsdichte erforderlichen Funktionskomponenten der Messeinrichtung 13, d. h. z. B. das Messelement 15, angeordnet.

Anhand der Fig. 2, 3 ist weiter ersichtlich, dass auch die Energiestrahlaufweitungseinrichtung 17 eine, insbesondere quaderartig ausgebildete, Gehäusekonstruktion 22 umfasst. Die Gehäusekonstruktion 22 der Energiestrahlaufweitungseinrichtung 17 ist oberhalb der Außenfläche der Gehäusekonstruktion 21 der Messeinrichtung 13, an oder in welcher die Energiestrahleintrittsfläche 16 angeordnet ist, angeordnet. Die Gehäusekonstruktion 22 der Energiestrahlaufweitungseinrichtung 17 kann, z. B. vermittels einer form- und/oder kraftschlüssigen und/oder stoffschlüssigen Befestigungsart, an der Gehäusekonstruktion 21 der Messeinrichtung 13 befestigt sein, sodass die beiden Gehäusekonstruktionen 21, 22 eine gemeinsam handhabbare Baugruppe bilden.

Anhand von Fig. 3 ist ersichtlich, dass die Vorrichtung 1 eine in der Bauebene E anordenbare bzw. angeordnete plattenartige bzw. -förmige, der Messeinrichtung 13 zuzuordnende Halterungseinrichtung 23 umfasst. Die Halterungseinrichtung 23 umfasst mehrere definierte Mess- bzw. Halterungspositionen 24, in welchen die Messeinrichtung 13 bzw., wie in Fig. 3 gezeigt, eine die Messeinrichtung 13 lagernde Adaptereinrichtung 25 in einer definierten räumlichen Positionierung relativ zu einem Referenzpunkt der Vorrichtung 1, beispielsweise der Bau- bzw. Fokusebene E, E, halterbar ist.

Die Adaptereinrichtung 25 umfasst einen hier stegartigen Halterungsabschnitt 26, mit welchem die Adaptereinrichtung 25, z. B. formschlüssig, in einer entsprechenden Halterungsposition 24 der Halterungseinrichtung 23 halterbar ist, und wenigstens einen zweiten Lagerabschnitt 26, mit welchem die Adaptereinrichtung 25 wenigstens eine Messeinrichtung 13 lagert. Ersichtlich ist die vermittels der Adaptereinrichtung 25 gelagerte Messeinrichtung 13 stets in einer definierten räumlichen, insbesondere vertikalen, Positionierung relativ zu wenigstens einem Referenzpunkt der Vorrichtung, insbesondere der Bau- oder Fokusebene E, E', angeordnet.

Jeweilige Halterungspositionen 24 sind durch in einer definierten, hier beispielhaft matrixartigen, d. h. reihen- und/oder spaltenartigen, Anordnung ausgebildete Ausnehmungen 28 in einem plattenartigen bzw. -förmigen Grundkörper der Halterungseinrichtung 23 gebildet, in welchen die Messeinrichtung 13 bzw. die die Messeinrichtung 13 lagernde Adaptereinrichtung 25, insbesondere formschlüssig, befestigbar ist. Zum Zweck der Befestigung der Mess- bzw. Adaptereinrichtung 13, 25 an der Halterungseinrichtung 23 sind sowohl messeinrichtungs- bzw. adaptereinrichtungsseitig als auch halterungseinrichtungsseitig Befestigungselemente (nicht gezeigt) angeordnet bzw. ausgebildet, welche eingerichtet sind, unter Ausbildung einer (beschädigungs- bzw. zerstörungsfrei) lösbaren Befestigung der Mess- bzw. Adaptereinrichtung 13, 25 in jeweiligen Halterungspositionen 24 zusammenzuwirken. Bei entsprechenden Befestigungselementen kann es sich für den Fall einer formschlüssigen Befestigung der Mess- bzw. Adaptereinrichtung 13, 25 in jeweiligen Halterungspositionen 24 um Formschlusselemente, d. h. z. B. um Formschlussvorsprünge bzw. Formschlussaufnahmen, bzw. um Steckelemente, d. h. z. B. um Steckvorsprünge bzw. Steckaufnahmen, handeln.

In dem in Fig. 1 gezeigten Ausführungsbeispiel ist die Halterungseinrichtung 23 flächenmäßig so bemessen, dass sie die Bauebene E vollständig abdeckt. Dies ermöglicht eine Vielzahl an unterschiedlichen Halterungs- bzw. Messpositionen, sodass im Rahmen der Durchführung von Messvorgängen auch winklig relativ zu einer Normalen verlaufende Energiestrahlen 4 im Hinblick auf ihre Leistung bzw. Leistungssichte mit hoher Reproduzierbarkeit messbar sind. Dies ist in Fig. 1 strichpunktiert dargestellt.

Fig. 3 zeigt, dass die Halterungseinrichtung 23 mehrere, insbesondere relativ zueinander bewegbar gelagerte, aneinander befestigbare bzw. befestigte Halterungseinrichtungssegmente 23a - 23c umfassen kann. Relativ zueinander bewegbar gelagert aneinander befestigbare bzw. befestigte Halterungseinrichtungssegmente 23a - 23c können zwischen einer in Fig. 3 gezeigten Betriebsstellung, in welcher diese derart relativ zueinander bewegt sind, dass diese die Bauebene E vollständig abdecken, und einer Nichtbetriebsstellung, in welcher diese derart relativ zueinander bewegt sind, dass diese die Bauebene E nicht vollständig abdecken, bewegbar gelagert sein. Die bewegbare Lagerung der Halterungseinrichtungssegmente 23a - 23c kann z. B. durch eine Klapp- oder Schwenklagerung der Halterungseinrichtungssegmente 23a - 23c realisiert sein.

In Fig. 3 ist angedeutet, dass die Strahlablenkeinrichtung 8 zur Ablenkung des Energiestrahls 4 auf eine in einer bestimmten Halterungsposition 24 gehalterte Messeinrichtung 13 eingerichtet ist. Die Strahlablenkeinrichtung 8 ist dabei insbesondere eingerichtet, einen Energiestrahl 4 gemäß einer, insbesondere benutzerseitig, vorgebbaren oder vorgegebenen Ab- bzw. Reihenfolge auf unterschiedlich positionierte, d. h. insbesondere in unterschiedlichen Halterungspositionen 24 gehalterte, Messeinrichtungen 13 zu lenken. Über die Vorgabe entsprechender Ab- bzw. Reihenfolgen können definierte Messprogramme, etwa zur Aufnahme von Leistungskurven bzw. -kennlinien zu Qualitätssicherungszwecken, implementiert werden. Hierfür wirkt eine hard- und/oder softwaremäßig implementierte Steuereinrichtung 29 der Vorrichtung 1 steuerungstechnisch mit der Strahlablenkeinrichtung 8 zusammen.

Die Strahlablenkeinrichtung 8 ist sonach in Abhängigkeit von von der Steuereinrichtung 29 erzeugten Steuerbefehlen steuerbar bzw. gesteuert. Die Steuereinrichtung 29 ist eingerichtet, die Steuerbefehle auf Grundlage von über eine Benutzerschnittstelle 30, insbesondere eine Touch-Displayeinrichtung, der Vorrichtung 1 gegebenen Benutzereingaben zu erzeugen. Über die Benutzerschnittstelle 30 sind insbesondere entsprechende Halterungs-Messpositionen 24, auf welche ein Energiestrahl 4 gelenkt werden soll, bzw. entsprechende Ab- bzw. Reihenfolgen, gemäß welchen ein Energiestrahl 4 auf in unterschiedlichen Halterungspositionen 24 gehalterte Messeinrichtungen 13 gelenkt werden soll, vorgebbar.

Mit der in Fig. 1 gezeigten Vorrichtung 1 lässt sich ein Verfahren zur Messung der Leistung, insbesondere der Leistungsdichte, eines Energiestrahls 4 einer Belichtungseinrichtung 6 einer Vorrichtung 1 zur additiven Herstellung dreidimensionaler Objekte 2 implementieren. Das Verfahren zeichnet sich dadurch aus, dass zu dessen Durchführung wenigstens eine entsprechende Messeinrichtung 13 verwendet wird.

Wesentlich an dem Verfahren ist, dass die Messeinrichtung 13 (und somit auch die dieser zugeordnete Energiestrahlaufweitungseinrichtung 17) unabhängig von der Ausgangsleistung der Belichtungseinrichtung 6 bzw. der Leistung des im Hinblick auf seine Leistung bzw. Leistungsdichte zu messenden Energiestrahls 4 in einer konstanten, insbesondere vertikalen, Positionierung relativ zu wenigstens einem Referenzpunkt der Vorrichtung 1, insbesondere der Bauebene E der Vorrichtung 1 bzw. der Fokusebene E' des Energiestrahls 4, angeordnet werden kann bzw. angeordnet wird.

## Patentansprüche

1. Vorrichtung (1) zur additiven Herstellung dreidimensionaler Objekte (2) durch sukzessive schichtweise selektive Belichtung und damit einhergehende sukzessive schichtweise selektive Verfestigung von Baumaterialschichten aus einem vermittels eines Energiestrahls (4) verfestigbaren Baumaterial (3), umfassend:
- eine Belichtungseinrichtung (6), welche zur Erzeugung eines Energiestrahls (4) zur sukzessiven schichtweisen selektiven Belichtung und damit einhergehenden sukzessiven schichtweisen selektiven Verfestigung von Baumaterialschichten aus einem vermittels des Energiestrahls (4) verfestigbaren Baumaterial (3) eingerichtet ist,
- eine der Belichtungseinrichtung (6) zuordenbare oder zugeordnete Messeinrichtung (13), welche zur Messung der Leistung, insbesondere der Leistungsdichte, des von der Belichtungseinrichtung (6) erzeugten Energiestrahls (4) eingerichtet ist, wobei die Messeinrichtung (13) ein eine Energiestrahleintrittsfläche (16) umfassendes Messelement (15) umfasst,
- wenigstens eine der Energiestrahleintrittsfläche (16) vorgeschaltet angeordnete oder ausgebildete Energiestrahlaufweitungseinrichtung (17), welche zur, insbesondere optischen, Aufweitung eines im Hinblick auf seine Leistung zu messenden Energiestrahls (4) eingerichtet ist,
- eine in der Bauebene (E) der Vorrichtung (1) anordenbare oder angeordnete, mehrere definierte Halterungspositionen (24), in welchen die Messeinrichtung (13) oder eine die Messeinrichtung (13) lagernde Adaptereinrichtung (25) in einer definierten räumlichen Positionierung relativ zu einem Referenzpunkt der Vorrichtung (1) halterbar ist, umfassende plattenartige Halterungseinrichtung (23), **dadurch gekennzeichnet, dass** jeweilige Halterungspositionen (24) durch Ausnehmungen (28) in einem Grundkörper der Halterungseinrichtung (23) gebildet sind, in welchen die Messeinrichtung (13) oder eine die Messeinrichtung (13) lagernde Adaptereinrichtung (25), insbesondere formschlüssig, befestigbar ist.

2. Vorrichtung nach einem der vorhergehenden Ansprüche, **dadurch gekennzeichnet, dass** die Messeinrichtung (13) unabhängig von der Leistung des im Hinblick auf seine Leistungsdichte zu messenden Energiestrahls (4) in einer konstanten, insbesondere vertikalen, Positionierung relativ zu wenigstens einem Referenzpunkt der Vorrichtung (1), insbesondere einer Bauebene (E) der Vorrichtung (1) und/oder einer Fokusebene (E') des Energiestrahls (4), angeordnet ist.

3. Vorrichtung nach Anspruch 1 oder 2, **dadurch gekennzeichnet, dass** die Messeinrichtung (13) eine einen Grundkörper der Messeinrichtung (13) bildende, insbesondere quader- oder würfelartig ausgebildete, Gehäusekonstruktion (21) umfasst, wobei die Energiestrahleintrittsfläche (16) an oder in einer Außenfläche der Gehäusekonstruktion (21) angeordnet oder ausgebildet ist.

4. Vorrichtung nach Anspruch 3, **dadurch gekennzeichnet, dass** die Energiestrahlaufweitungseinrichtung (17) eine, insbesondere quaderartig ausgebildete, Gehäusekonstruktion (22) umfasst, welche oberhalb der Außenfläche der Gehäusekonstruktion (21) der Messeinrichtung (13), an oder in welcher die Energiestrahleintrittsfläche (16) angeordnet oder ausgebildet ist, anordenbar oder angeordnet ist.

5. Vorrichtung nach einem der vorhergehenden Ansprüche, **dadurch gekennzeichnet, dass** die Messeinrichtung (13) oder eine die Messeinrichtung (13) lagernde Adaptereinrichtung (25) in wenigstens einem Bewegungsfreiheitsgrad zwischen wenigstens zwei Halterungspositionen (24) bewegbar gelagert ist.

6. Vorrichtung nach einem der vorhergehenden Ansprüche, **dadurch gekennzeichnet, dass** die Halterungseinrichtung (23) so bemessen ist, dass sie die Bauebene (E) der Vorrichtung (1) zumindest abschnittsweise, insbesondere vollständig, abdeckt.

7. Vorrichtung nach einem der vorhergehenden Ansprüche, **dadurch gekennzeichnet, dass** die Halterungseinrichtung (23) mehrere, insbesondere relativ zueinander bewegbar gelagert, aneinander befestigbare oder befestigte Halterungseinrichtungssegmente (23a - 23c) umfasst.

8. Vorrichtung nach einem der vorhergehenden Ansprüche, **gekennzeichnet durch** eine der Belichtungseinrichtung (6) zuordenbare oder zugeordnete Strahlablenkeinrichtung (8), welche zur Ablenkung des Energiestrahls (4) auf eine in einer bestimmten Halterungsposition (24) gehalterte Messeinrichtung (13) eingerichtet ist.

9. Vorrichtung nach Anspruch 8, **dadurch gekennzeichnet, dass** die Strahlablenkeinrichtung (8) eingerichtet ist, den Energiestrahl (4) gemäß einer, insbesondere benutzerseitig, vorgebbaren oder vorgegebenen Reihenfolge auf in unterschiedlichen Halterungspositionen (24) gehalterte Messeinrichtungen (13) zu lenken.

10. Vorrichtung nach Anspruch 8 oder 9, **dadurch gekennzeichnet, dass** die Strahlablenkeinrichtung (8) in Abhängigkeit von von einer Steuereinrichtung (29) erzeugten Steuerbefehlen steuerbar oder gesteuert ist.

11. Verfahren zur Messung der Leistung, insbesondere der Leistungsdichte, eines Energiestrahls (4) einer Belichtungseinrichtung (6) einer Vorrichtung (1) zur additiven Herstellung dreidimensionaler Objekte (2) nach einem der vorhergehenden Ansprüche 1 bis 10, **dadurch gekennzeichnet, dass** zur Durchführung des Verfahrens wenigstens eine Messeinrichtung (13) der Vorrichtung (1) nach einem der Ansprüche 1 bis 10 verwendet wird.

## Claims

1. Apparatus (1) for the additive manufacturing of three-dimensional objects (2) by successive, selective layer-by-layer exposure and thereby successive, selective layer-by-layer compacting of building material layers, consisting of building material (3) compactable by means of an energy beam (4), comprising:
- an exposure device (6), which is equipped to generate a beam of energy (4) for the successive, selective layer-by-layer exposure and thereby successive, selective layer-by-layer compacting of building material layers, consisting of building material (3) compactable by means of an energy beam (4);
- a measuring unit (13) attributable or attributed to the exposure device (6), which is equipped to measure the output, in particular, the power density of the energy beam (4) generated by the exposure device (6), wherein the measuring unit (13) comprises a measuring element (15) covering the energy beam entry surface (16);
- at least one energy beam expansion device (17), arranged or embodied upstream from the energy beam entry surface (16), which is equipped to measure, in particular, the optical expansion of an energy beam (4) to be measured with regard to its output;
- circumferential plate-type fastener unit (23) that can be arranged or that is arranged on the construction plane (E) of the apparatus (1), provided with several defined fastener positions (24), wherein the measurement unit (13) or an adapter unit (25) supporting the measurement unit (13) can be fastened in a defined spatial positioning relative to a reference point of the apparatus (1), **characterised in that** the respective fastener positions (24) are formed by recesses (28) in a base body of the fastener unit (23), in which the measurement unit (13) or an adapter unit (25) supporting the measurement unit (13) can be fastened, in particular form-fit.

2. Apparatus according to one of the foregoing claims, **characterised in that** the measurement unit (13) is arranged independently from the output of the energy beam (4) to be measured with regard to its power density, in a constant, in particular, vertical position relative to at least one reference point of the apparatus (1), in particular, a construction plane (E) of the apparatus (1) and/or a focus plane (E') of the energy beam (4).

3. Apparatus according to claim 1 or 2, **characterised in that** the measurement unit (13) comprises a housing structure (21) forming the base body of the measurement unit (13), embodied, in particular, like an ashlar or a cube, wherein the energy beam entry surface (16) is arranged or embodied on or in an outer surface of the housing structure (21).

4. Apparatus according to claim 3, **characterised in that** the energy beam expansion device (17) comprises a housing structure (22) embodied, in particular, like a cube, which can be arranged or embodied above the outer surface of the housing structure (21) of the measurement unit (13), on or in which the energy beam entry surface (16) is arranged or embodied.

5. Apparatus according to one of the foregoing claims, **characterised in that** the measurement unit (13) or an adapter unit (25) supporting the measurement unit (13) is placed movably in at least one free-moving space between at least two fastener positions (24).

6. Apparatus according to one of the foregoing claims, **characterised in that** the fastener unit (23) is dimensioned to cover the construction plane (E) of the apparatus (1) at least by sections, in particular, completely.

7. Apparatus according to one of the foregoing claims, **characterised in that** the fastener unit (23) comprises several fastener mechanism elements (23a
- 23c), which are positioned movably, in particular, relative to each other and which can be fastened or which are fastened on each other.

8. Apparatus according to one of the foregoing claims, **characterised in that** a beam deflection unit (8) attributable or attributed to the exposure device (6), which is equipped to deflect the energy beam (4) onto a measurement unit (13) fastened in a certain fastener position (24).

9. Apparatus according to claim 8, **characterised in that** the beam deflection unit (8) is equipped to guide the energy beam (4) to measurement units (13) held in different fastener positions (24) according to a sequence definable or defined, in particular, by the user.

10. Apparatus according to claim 8 or claim 9, **characterised in that** the beam deflection unit (8) is controllable or controlled in dependency on control commands generated by a control unit (29).

11. Process for measurement of the output, in particular, the power density of an energy beam (4) of an exposure device (6) of an apparatus (1) for the additive manufacturing of three-dimensional objects (2) according to one of the foregoing claims 1 to 10, **characterised in that** at least one measurement unit (13) of the apparatus (1) according to one of the claims 1 to 10 is used for implementing the process.

## Revendications

1. Dispositif (1) de fabrication additive d'objets tridimensionnels (2) par éclairage sélectif de couches successives et ainsi, en conséquence, par solidification sélective de couches successives de couches de matériaux de construction à partir d'un matériau de construction (3) solidifiable au moyen un rayon d'énergie (4), comprenant :
- un dispositif d'éclairage (6) créé pour produire un rayon d'énergie (4) pour l'éclairage sélectif par couches successives et ainsi, en conséquence, par solidification sélective par couches successives de couches de matériaux de construction à partir d'un matériau de construction (3) solidifiable au moyen du rayon d'énergie (4),
- un dispositif de mesure (13) associé ou pouvant être associé au dispositif d'éclairage (6), créé pour mesurer la puissance, en particulier la densité énergétique du rayon d'énergie (4) produit par le dispositif d'éclairage (6), le dispositif de mesure (13) comprenant un élément de mesure (15) comprenant une surface incidente du rayon d'énergie (16),
- au moins un dispositif d'élargissement du rayon d'énergie (17) formé ou disposé en amont de la surface incidente du rayon d'énergie (16), créé pour élargir, en particulier optiquement, le rayon d'énergie (4) à mesurer du point de vue de sa puissance,
- un dispositif de fixation plat (23) disposé ou disposable dans le plan de construction (E) du dispositif (1), comprenant plusieurs positions de fixation définies (24) dans lesquelles un dispositif de mesure (13) ou un adaptateur (25) supportant le dispositif de mesure (13) peut être fixé dans une position définie dans l'espace par rapport à un point de référence du dispositif (1), **caractérisé en ce que** sont constituées des positions de fixation respectives (24) par des découpes (28) dans un châssis du dispositif de fixation (23), dans lequel le dispositif de mesure (13) ou un adaptateur (25) supportant le dispositif de mesure (13) peut être fixé, en particulier par complémentarité de forme.

2. Dispositif selon l'une des revendications précédentes, **caractérisé en ce que** le dispositif de mesure (13) est disposé dans une position constante, en particulier verticale, par rapport à au moins un point de référence du dispositif (1), en particulier au plan de construction (E) du dispositif (1) et/ou à un plan de focalisation (E') du rayons d'énergie (4), indépendamment de la puissance du rayon d'énergie à mesurer (4) quant à sa densité de puissance.

3. Dispositif selon la revendication 1 ou 2, **caractérisé en ce que** le dispositif de mesure (13) comprend un boîtier (21) constituant un châssis du dispositif de mesure (13), conçu en particulier en forme de cube ou de brique, la surface incidente du rayon d'énergie (16) étant disposée ou constituée sur ou dans la surface externe du boîtier (21).

4. Dispositif selon la revendication 3, **caractérisé en ce que** le dispositif d'élargissement du rayon d'énergie (17) comprend un boîtier (22) créé en particulier en forme de brique, qui est disposé ou disposable au-dessus de la surface externe du boîtier (21) du dispositif de mesure (13), sur ou dans lequel la surface incidente du rayon d'énergie (16) est constituée ou disposée.

5. Dispositif selon l'une des revendications précédentes, **caractérisé en ce que** le dispositif de mesure (13) ou un adaptateur (25) supportant le dispositif de mesure (13) peut être positionné de façon mobile dans au moins un degré de liberté de mouvement entre au moins deux positions de fixation (24).

6. Dispositif selon l'une des revendications précédentes, **caractérisé en ce que** le dispositif de fixation (23) est dimensionné de sorte qu'il couvre le plan de construction (E) du dispositif (1) au moins en partie, en particulier complètement.

7. Dispositif selon l'une des revendications précédentes, **caractérisé en ce que** le dispositif de fixation (23) comprend plusieurs éléments de dispositif de fixation (23a - 23c), en particulier positionnés de façon mobile les uns par rapport aux autres, fixables ou fixés.

8. Dispositif selon l'une des revendications précédentes, **caractérisé par** un dispositif de déviation de rayon (8) associé ou associable au dispositif d'éclairage (6), qui est installé pour dévier le rayon d'énergie (4) sur un dispositif de mesure (13) fixé en une position de fixation déterminée (24).

9. Dispositif selon la revendication 8, **caractérisé en ce que** le dispositif de déviation de rayon (8) est disposé pour dévier le rayon d'énergie (4) suivant une série prédéfinie ou prédéfinissable, en particulier par l'utilisateur, sur des dispositifs de mesure (13) fixés en différentes positions de fixation (24).

10. Dispositif selon la revendication 8 ou 9, **caractérisé en ce que** le dispositif de déviation de rayon (8) est ou peut être contrôlé en fonction de commandes de contrôle générées par un dispositif de contrôle (29).

11. Procédé de mesure de puissance, en particulier de densité de puissance, d'un rayon d'énergie (4) d'un dispositif d'éclairage (6) d'un dispositif (1) de fabrication additive d'objets tridimensionnels (2) selon l'une des revendications précédentes 1 à 10, **caractérisé en ce qu'**on utilise au moins un dispositif de mesure (13) du dispositif (1) selon l'une des revendications 1 à 10 pour réaliser le procédé.
